# EUROPEAN PATENT SPECIFICATION

(11) **EP 4 530 047 B1**
(45) Date of publication and mention of the grant of the patent: **03.09.2025**
(21) Application number: 24197141.5
(22) Date of filing: 29.08.2024
(51) Int. Cl.: B29C 65/18, B29C 65/30, B29C 65/32, B29C 65/48, B29C 65/50, B29D 99/00, B29C 65/78, F01D 5/30, F01D 25/28, B29L 31/08

(54) **SYSTEM AND METHOD FOR COUPLING A COMPONENT TO A GAS TURBINE ENGINE BLADE**
SYSTEM UND VERFAHREN ZUM VERBINDEN EINER KOMPONENTE MIT EINER SCHAUFEL EINES GASTURBINENTRIEBWERKS
SYSTÈME ET PROCÉDÉ POUR COUPLER UN COMPOSANT À UNE PALE DE MOTEUR À TURBINE À GAZ

(30) Priority: 26.09.2023 GB 202314723
(43) Date of publication of application: 02.04.2025
(73) Proprietor: Rolls-Royce plc, London N1 9FX (GB)
(72) Inventor: Monoranu, Marius, Derby, DE24 8BJ (GB)
(74) Representative: Rolls-Royce plc

(56) References cited:
- WO-A1-2021/164958
- FR-A1- 3 083 568
- US-A1- 2016 076 387

## Description

### FIELD

The present invention relates to a system and a method for coupling at least one component to a blade of the gas turbine engine.

### BACKGROUND

Generally, gas turbine engines include a fan that directs air towards a bypass duct and an engine core of the gas turbine engine. The fan includes a number of blades that are subjected to large amounts of centrifugal forces. During an operation of the gas turbine engine, a root area and an annulus area of each blade may be subjected to high amounts of wear. Thus, each blade typically includes wear resistant strips, such as a Vespel^{®} strip manufactured by DuPont^{™}, attached proximal to the root area and the annulus area via a film adhesive so as to mitigate the wear of the blade, thereby protecting the blade.

Conventionally, an outer surface of the wear resistant strips may be activated by means of a dry grit blast process to expose embedded polytetrafluoroethylene (PTFE) fibres in the wear resistant strip. The blade along with the wear resistant strips and the film adhesives are then cured under vacuum conditions, for example, in an autoclave. Further, curing of the film adhesive in the autoclave may incur high manufacturing costs, as high amounts of energy may be consumed during heating of the entire blade. Conventional methods of joining the wear resistant strip to the blade may cause the adhesive to have a non-uniform bond thickness between the wear resistant strip and the blade. In some conventional methods, oversized wear resistant strips are attached to the blade, and edges of the oversized wear resistant strips are later machined to meet tight tolerances. Such a machining operation may induce damage to the blade, which may in turn lead to delamination and in-service part repairs of the blade, thereby increasing manufacturing costs as well as maintenance costs associated with the blade.

Thus, conventional techniques of coupling the wear resistant strip with the blade may be costly, may affect a quality of the blade, and may cause non-compliance with design requirements of the blade.

International patent application WO 2021/164958 A1 discloses a fixing apparatus for fixing a secondary component to a fan blade. The fixing apparatus has a first clamp part that has a first inner surface and a second clamp part that has a second inner surface. The first inner surface and the second inner surface each have a profile that corresponds to a profile of a portion of the fan blade. The first clamp part and/or the second clamp part has a recess in the respective first inner surface and/or second inner surface for receiving the secondary component, and a corresponding heater for applying heat to the secondary component located in the recess in use. The first clamp part and the second clamp part are configured to cooperate with one another to clamp the portion of a blade between them in a clamping operation and to hold the secondary component against the blade when the secondary component is received within the recess.

United States patent application US 2016/0076387 A1 discloses a tooling for fastening metal reinforcement on the leading edge of a turbine engine blade. The tooling has a blade support for receiving a blade while leaving surfaces of the leading edge of the blade disengaged; and a leading edge reinforcement support on which the blade support is designed to be mounted, and includes two lateral wedges between which the metal reinforcement for the leading edge of the blade is positioned. The wedges can moving towards each other and apart from each other and each of them has a suction grid for gripping the metal reinforcement. The leading edge reinforcement support also has heater elements for polymerizing an adhesive film applied on the leading edge surfaces of the blade.

French patent application FR 3083568 A1 discloses a device for attaching a wear strip to at least one contact face of a turbo engine rotor blade. The device has heat-generating means for activating a product for attaching the wear strip to the blade. The heat-generating means are designed to generate heat only on the wear strip and on the at least one contact face of the blade.

### SUMMARY

In a first aspect, there is provided a system for coupling at least one component to a blade of a gas turbine engine as set out in claim 1.

The system of the present invention may provide a cost-effective approach to couple the at least one component to the blade. Specifically, the system uses the heating device to cure the adhesive layer in order to couple the at least one component to the blade. Thus, the heating device may eliminate the requirement of heating the entire blade to cure the adhesive layer (for example, in an autoclave), which may save manufacturing costs. Further, the system may provide faster curing cycles as only a portion of the blade is heated for curing the adhesive layer.

Further, as the pressure strip fully encloses the plate, the pressure strip may allow uniform distribution of the pressure (that is being applied by the pressure applicator) along a length of the plate. The pressure strip of the system may provide spew control, thereby providing the uniform bond thickness of the adhesive layer and minimal to no voids between the at least one component and the blade. As the voids are minimal, an adhesion between the at least one component and the blade may be improved, while also improving in-service life and functionality of the at least one component. Further, the system may eliminate any additional steps of machining the at least one component, thereby maintaining the structural integrity of the at least one component as well as the blade. Furthermore, the at least one component may be of high quality and may be compliant with profile tolerances, surface tolerances, adhesive thickness, and porosity requirements.

Further, the system described herein may be used as an on-site as well an off-site repair solution during servicing of the blades. Furthermore, the system may be portable and easy to use by operators for repair and maintenance of blades.

In some embodiments, the at least one component includes a polyimide-based wear resistant strip, e.g. a Vespel^{®} wear resistant polyimide-based plastic strip manufactured by DuPont^{™}. It should be noted that the strip may demonstrate properties, such as, heat resistance, lubricity, dimensional stability, chemical resistance, wear resistance, and creep resistance. Therefore, the strip may allow the blade to be used in hostile and extreme operating conditions, while preventing damage to the blade. Alternatively, the system described herein may be used to couple any other component to a portion of the gas turbine engine.

In some embodiments, the at least one component is made of a material that exhibits a coefficient of friction below 0.15, high load resistance, high temperature resistance, corrosion resistance, and/or wear resistance. Thus, the at least one component may allow the blade to be used in hostile and extreme operating conditions, while preventing damage to the blade.

In some embodiments, the pressure strip includes at least one of a butyl rubber, a platinum cured rubber, a silicone based rubber, and a peroxide cured rubber. The pressure strip made of one of the above listed rubbers may completely enclose the plate of the intensifier tool so as to prevent a flow-out of the adhesive layer. This may result in the uniform bond thickness and minimal to no voids in the adhesive layer, thereby improving adhesion between the at least one component and the blade, as well as improving in-service life and functionality of the at least one component.

In some embodiments, the system further includes an insulation layer disposed on the blade. The insulation layer is further at least partially disposed on the pressure strip. The insulation layer may cover the blade to minimize heat dissipation and may retain different curing temperatures localized at a root area and/or an annulus area of the blade. The insulation layer may prevent any damage to the blade due to overheating.

In some embodiments, the at least one component includes a plurality of first components configured to be coupled to the root area of the blade and a pair of second components configured to be coupled to the annulus area of the blade. The plurality of first components and the pair of second components may serve as sacrificial components to protect the blade from wear and damage.

In some embodiments, the system further includes at least one first temperature sensor configured to measure a first temperature proximal to the root area of the blade and at least one second temperature sensor configured to measure a second temperature proximal to the annulus area of the blade. The at least one first temperature sensor is disposed proximal to the root area and the at least one second temperature sensor is disposed proximal to the annulus area.

The first temperature sensor and the second temperature sensor may measure the first and second temperatures proximal to the root area and the annulus area of the blade, respectively, so as to ensure that the first and second temperatures are sufficient to facilitate curing of the adhesive layer, without causing any damage to the at least one component, the blade, and/or the adhesive layer. Based on values of the first and second temperatures received from the first and second temperature sensors, the heating devices, that is used to cure the adhesive layers associated with the first and second components, may be operated so as to maintain different first and second temperatures at the root area and the annulus area. Thus, the heating device together with the first and second temperature sensors may allow multi-zone temperature curing of the adhesive layer near the root area of the blade and the annulus area of the blade.

In some embodiments, the plate of the intensifier tool includes at least one of a carbon material and a metallic material. The plate of the intensifier tool may be cost-effective and portable and may also facilitate incorporation of the heating device.

In some embodiments, the heating device is at least partially embedded within the plate of the intensifier tool. The heating device may cure the adhesive layer to couple the at least one component to the blade. Such a heating device may provide a stand-alone curing solution, thereby eliminating use of the autoclave to cure the adhesive layer to couple the at least one component to the blade. Further, the heating device may provide a portable solution for service and maintenance of the blade. The heating device may heat only the desired area of the blade instead of heating the entire blade, thereby preventing high energy consumption.

In some embodiments, the heating device includes at least one of an electric cartridge, a heated fabric, and a heated film. Such a heating device may provide a stand-alone curing solution, thereby eliminating use of the autoclave to cure the adhesive layer to couple the at least one component to the blade. Further, the heating device may provide a portable solution for service and maintenance of the blade. The heating device may heat only the desired area of the blade instead of heating the entire blade, thereby preventing high energy consumption.

In some embodiments, the heating device includes at least one of a ceramic heater, an induction heater, and a heated fluid. Such a heating device may provide a stand-alone curing solution, thereby eliminating use of the autoclave to cure the adhesive layer to couple the at least one component to the blade. Further, the heating device may provide a portable solution for service and maintenance of the blade. The heating device may heat only the desired area of the blade instead of heating the entire blade, thereby preventing high energy consumption.

In some embodiments, the pressure applicator includes one or more clamps configured to apply the pressure on the plate. The one or more clamps may ensure uniform application of pressure on the plate so that the at least one component may adhere to the blade in a desired manner, while maintaining the uniform bond thickness.

In a second aspect, there is provided a method of coupling at least one component to a blade of a gas turbine engine as set out in claim 13.

The method of the present invention may provide a cost saving approach to couple the at least one component to the blade. The method teaches use of the heating device to cure the adhesive layer in order to couple the at least one component to the blade. Thus, the method may eliminate the requirement of heating the entire blade to cure the adhesive layer (for example, in the autoclave), which may save manufacturing costs. Further, the method may provide faster curing cycles as only some portion of the blade is heated for curing the adhesive layer.

Further, the method also teaches use of pressure strip that may provide spew control, thereby providing the uniform bond thickness of the adhesive layer and minimal to no voids between the at least one component and the blade. As the voids are minimal, an adhesion between the at least one component and the blade may be improved. Further, the method may eliminate any additional steps of machining the at least one component, thereby maintaining the structural integrity of the at least one component as well as the blade. Furthermore, the at least one component may be of high quality and may be compliant with profile tolerances, surface tolerances, adhesive thickness, and porosity requirements.

Further, the method described herein may be used as on-site as well an off-site repair solution during servicing of the blades. Furthermore, the method may provide operators a portable and easy-to-use solution for repair and maintenance of blades.

In some embodiments, the method further includes disposing an insulation layer on the blade after coupling the pressure strip to the plate of the intensifier tool and the blade. The insulation layer may cover the blade to minimize heat dissipation and may retain the different curing temperatures localized at a root area and/or an annulus area of the blade. The insulation layer may prevent damage to the blade due to overheating.

In some embodiments, the at least one component includes a plurality of first components configured to be coupled proximal to a root area of the blade and a pair of second components configured to be coupled proximal to an annulus area of the blade. The plurality of first components and the pair of second components may serve as sacrificial components to protect the blade from wear and damage.

In some embodiments, the method further includes measuring, via at least one first temperature sensor disposed proximal to the root area, a first temperature proximal to the root area of the blade. The method further includes controlling a first temperature proximal to the root area of the blade, such that the first temperature corresponds to a first predetermined temperature value.

The first temperature sensor may measure the first temperature proximal to the root area so as to ensure that the first temperature proximal to the root area is sufficient to facilitate curing of the adhesive layer, without causing any damage to the plurality of first components, the root area, and/or the adhesive layer. Based on the value of the first temperature received from the first temperature sensor, the heating device, that is used to cure the adhesive layers associated with the plurality of first components, may be operated so as to maintain the first temperature at the root area.

In some embodiments, the method further includes measuring, via at least one second temperature sensor disposed proximal to the annulus area, a second temperature proximal to the annulus area of the blade. The method further incudes controlling the second temperature proximal to the annulus area of the blade, such that the second temperature corresponds to a second predetermined temperature value.

The second temperature sensor may measure the second temperature proximal to the annulus area of the blade so as to ensure that the second temperature proximal to the annulus area is sufficient to facilitate curing of the adhesive layer, without causing any damage to the pair of second components, the annulus area, and/or the adhesive layer. Based on the value of the second temperature, the heating device, that is used to cure the adhesive layers associated with the pair of second components, may be operated so as to maintain the second temperature at the annulus area. Thus, the heating device together with the second temperature sensor may allow multi-zone temperature curing of the adhesive layer near the annulus area of the blade.

In some embodiments, the pressure applicator includes one or more clamps. The method further includes applying the pressure on the plate via the one or more clamps. The one or more clamps may ensure proper application of pressure on the plate such that the at least one component may properly adhere to the blade, while maintaining the uniform bond thickness.

### BRIEF DESCRIPTION OF THE DRAWINGS

Embodiments will now be described by way of example only, with reference to the Figures, in which:
**FIG. 1** is a schematic side view of a gas turbine engine;
**FIG. 2** is a schematic perspective view illustrating first and second components to be coupled to a blade of the gas turbine engine of FIG. 1;
**FIG. 3** is a schematic perspective view illustrating a portion of the blade and a system for coupling the components to the blade of the gas turbine engine of FIG. 1;
**FIG. 4** is a schematic cross-sectional view of an intensifier tool associated with the system of FIG. 3;
**FIG. 5** is a schematic cross-sectional view illustrating a pressure strip of the system coupled to the intensifier tool and the blade;
**FIG. 6** is a schematic perspective view of the pressure strip coupled to the intensifier tool and the blade;
**FIG. 7** is a schematic cross-sectional view illustrating the component coupled to the blade;
**FIG. 8** is a schematic view of a heating device of an intensifier tool of an embodiment of the system of the present invention;
**FIG. 9** is a schematic view of a heating device of an intensifier tool of another embodiment of the system of the present invention;
**FIG. 10** is a schematic view of a heating device of an intensifier tool of yet another embodiment of the system of the present invention;
**FIG. 11** is a schematic view of a heating device of an intensifier tool of a further embodiment of the system of the present invention; and
**FIG. 12** is a flowchart for a method of coupling the component to the blade of the gas turbine engine of FIG. 1, according to an embodiment of the present invention.

### DETAILED DESCRIPTION

Aspects and embodiments of the present invention will now be discussed with reference to the accompanying figures. Further aspects and embodiments will be apparent to those skilled in the art.

As used herein, the term "configured to" and like is at least as restrictive as the term "adapted to" and requires actual design intention to perform the specified function rather than mere physical capability of performing such a function.

As used herein, the terms "first", "second", and "third" are used as identifiers. Therefore, such terms should not be construed as limiting of this invention. The terms "first", "second" and "third", when used in conjunction with a feature or an element can be interchanged throughout the embodiments of this invention.

As used herein, "at least one of A and B" should be understood to mean "only A, only B, or both A and B".

As used herein, the term "partially" refers to any percentage greater than 1%. In other words, the term "partially" refers to any amount of a whole. For example, "partially" may refer to a small portion, half, or a selected portion of a whole. In some cases, "partially" may refer to a whole amount. The term "partially" refers to any percentage less than 100%.

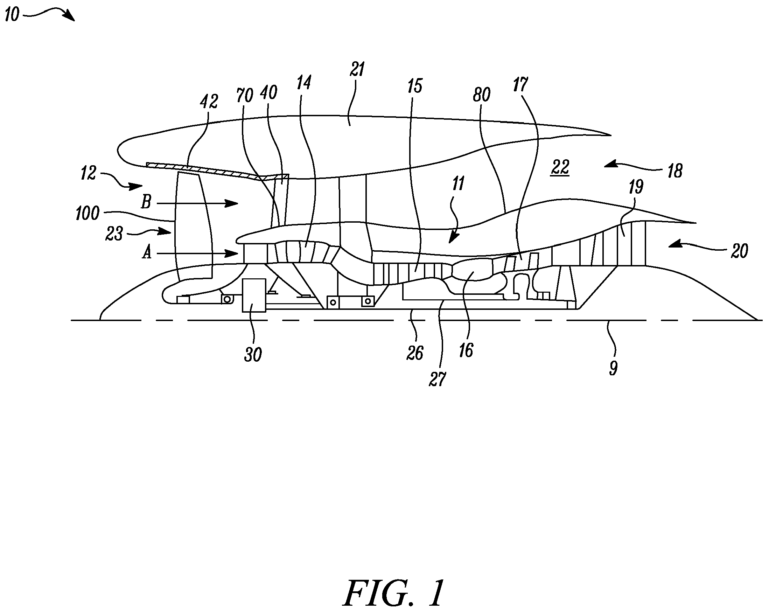

FIG. 1 illustrates a schematic side view of a gas turbine engine 10 having a principal rotational axis 9. The gas turbine engine 10 comprises an air intake 12 and a propulsive fan 23 that generates two airflows: a core airflow A and a bypass airflow B. The gas turbine engine 10 comprises an engine core 11 that receives the core airflow A. In other words, the core airflow A enters the engine core 11. The fan 23 is located upstream of the engine core 11. The fan 23 includes a plurality of blades 100 (only one is shown herein for illustrative purposes) that upon rotating, generates the core airflow A and the bypass airflow B. The engine core 11 comprises, in axial flow series, a compressor, a combustor, and a turbine. Specifically, the engine core 11 comprises, in axial flow series, a low pressure compressor 14, a high pressure compressor 15, a combustor 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22 surrounding the engine core 11. The bypass airflow B flows through the bypass duct 22 to provide propulsive thrust, where it is straightened by a row of outer guide vanes 40 before exiting the bypass exhaust nozzle 18. The outer guide vanes 40 extend radially outwardly from an inner ring 70 which defines a radially inner surface of the bypass duct 22. Rearward of the outer guide vanes 40, the engine core 11 is surrounded by an inner cowl 80 which provides an aerodynamic fairing defining an inner surface of the bypass duct 22. The inner cowl 80 is rearwards of and axially spaced from the inner ring 70. A fan case 42 defines an outer surface of the bypass duct 22. The inner ring 70 defines the inner surface of the bypass duct 22 towards the rear of the fan case 42. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustor 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. A core shaft 27 connects the turbine 17, 19 to the compressor 14, 15. Specifically, the high pressure turbine 17 drives the high pressure compressor 15 by the suitable core shaft 27 or an interconnecting shaft. The fan 23 generally provides the majority of the propulsive thrust. The epicyclic gearbox 30 is a reduction gearbox.

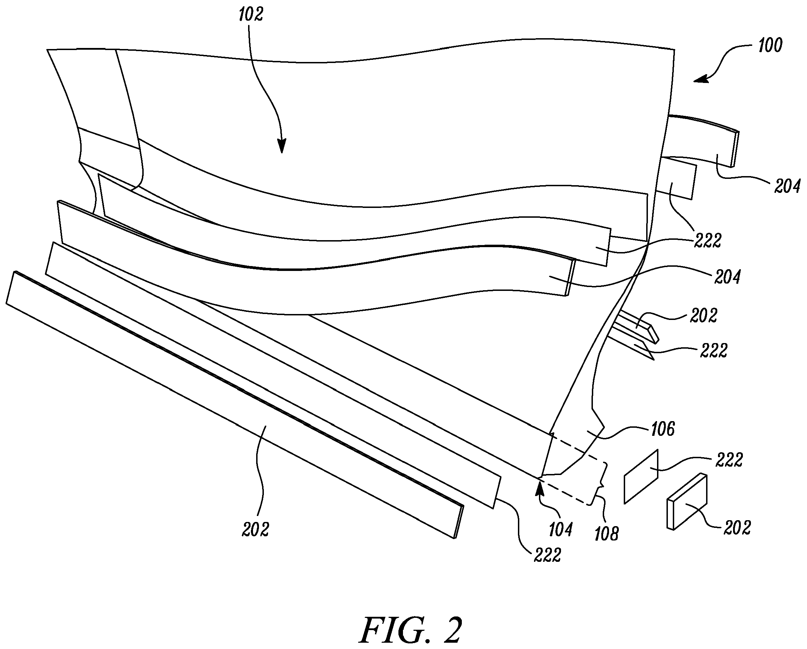

FIG. 2 is a schematic perspective view of a portion of the blade 100 associated with the fan 23 shown in FIG. 1, according to an embodiment of the present invention. Although only the single blade 100 is being explained in detail, the details provided herein are equally applicable to all blades 100 of the fan 23, without any limitations. The blade 100 includes an annulus area 102 and a root area 104. The annulus area 102 extends from the root area 104. It should be noted that the root area 104 of the blade 100 may include a dovetail root, a firtree root, or other type of root. In the illustrated embodiment of FIG. 2, the root area 104 of the blade 100 includes the dovetail root.

The present invention is directed towards coupling of at least one component 202, 204 with the blade 100. Specifically, the at least one component 202, 204 includes a plurality of first components 202 configured to be coupled to the root area 104 of the blade 100 and a pair of second components 204 configured to be coupled to the annulus area 102 of the blade 100.

The plurality of first components 202 includes four first components 202 that are coupled to the root area 104 at each side of the blade 100. Particularly, the plurality of first components 202 includes a first pair of the first components 202 coupled to the root area 104 of the blade 100 disposed opposite to each other and a second pair of the first components 202 configured to be coupled to corresponding flanks 106 (only one of which is shown herein) of the root area 104 of the blade 100. Further, each of the first pair of the first components 202 is rectangular in shape and corresponds to a shape of the root area 104 at which the first component 202 is to be coupled. As shown in FIG. 2, each of the second pair of first components 202 is rectangular in shape. Further, each of the second pair of the first components 202 is rectangular in shape. In other examples, the second pair of first components 202 may have any other shape. Furthermore, the pair of second components 204 may have a curved shape similar to a shape of the annulus area 102 of the blade 100. Each of the first components 202 and the second components 204 are embodied as strips herein.

The plurality of first components 202 and the pair of second components 204 may serve as sacrificial components to protect the blade 100 from wear and damage. Specifically, since the blade 100 may experience centrifugal forces during an operation of the gas turbine engine 10, the plurality of first components 202 and the pair of second components 204 may prevent the blade 100 from wear and damage. In some embodiments, the at least one component 202, 204 includes a polyimide-based wear resistant strip., e.g. a Vespel^{®} strip manufactured by DuPont^{™}, and may demonstrate properties, such as, heat resistance, lubricity, dimensional stability, chemical resistance, wear resistance, and creep resistance. Therefore, the strip may allow the blade 100 to be used in hostile and extreme operating conditions, while preventing damage to the blade 100.

In other embodiments, the at least one component 202, 204 may be made of any other material. For example, in some embodiments, the at least one component 202, 204 is made of a material that exhibits a coefficient of friction below 0.15, high load resistance, high temperature resistance, corrosion resistance, and/or wear resistance. Thus, the at least one component 202, 204 may allow the blade 100 to be used in hostile and extreme operating conditions, while preventing damage to the blade 100. In some examples, the at least one component 202, 204 may be made of any fiber reinforced plastic. Further, the material of the at least one component 202, 204 may have a lower hardness than the material of the blade 100 such that the at least one component 202, 204 acts as a sacrificial component and wears in use to protect the blade 100.

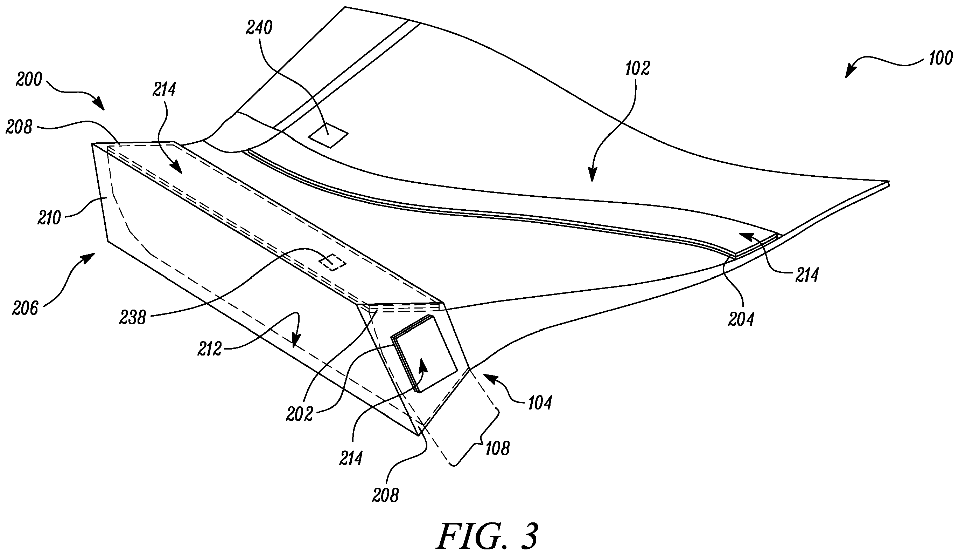

FIG. 3 is a schematic perspective of a system 200 for coupling the at least one component 202, 204 to the blade 100 of the gas turbine engine 10 of FIG. 1. The system 200 includes a blade holder 206. The blade holder 206 holds the blade 100 in a stationary condition during the coupling of the at least one component 202, 204 with the blade 100. The blade holder 206 includes a plurality of side walls 208. In the illustrated embodiment of FIG. 3, the blade holder 206 includes four side walls 208.

The blade holder 206 further includes a bottom wall 210 connected to each of the plurality of side walls 208. The bottom wall 210 and the plurality of side walls 208 together define a receiving space 212 to receive at least a portion 108 of the blade 100 and the at least one component 202 therein. As is apparent from FIG. 3, the receiving space 212 receives the root area 104 of the blade 100 and the plurality of first component 202 therein. Further, the blade holder 206 may be similar in shape to the root area 104 of the blade 100, so that the root area 104 of the blade 100 is receivable within the blade holder 206.

The system 200 further includes an intensifier tool 214 disposed on the at least one component 202, 204. Specifically, one intensifier tool 214 is disposed on each component 202, 204 to facilitate coupling of the corresponding component 202, 204 with the blade 100. The intensifier tool 214 coupled to the corresponding components 202, 204 are similar in terms of functionality and arrangement of devices, however, a shape and a size of the intensifier tool 214 may vary as per a shape and a size of the component 202, 204.

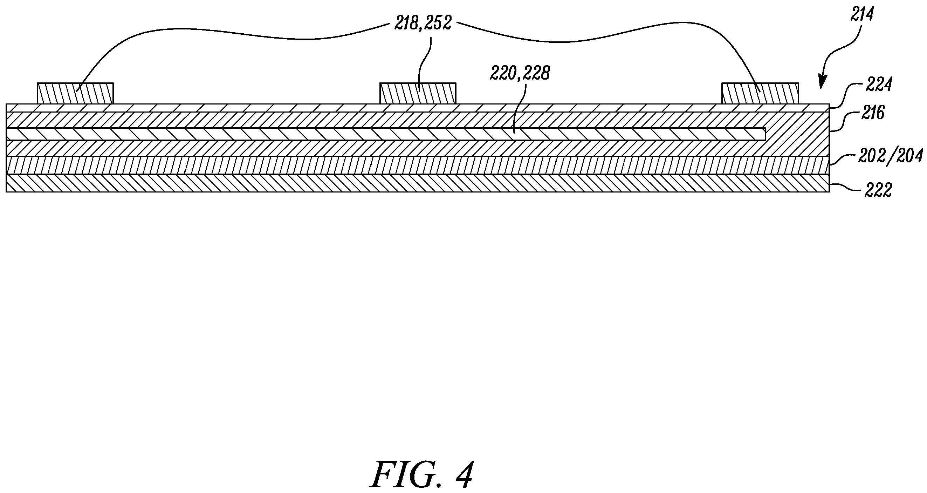

FIG. 4 is a schematic cross-sectional view illustrating the intensifier tool 214. The intensifier tool 214 includes a plate 216 configured to contact the at least one component 202, 204. In some embodiments, the plate 216 of the intensifier tool 214 includes at least one of a carbon material and a metallic material. It should be noted that a shape and a size of the plate 216 is similar to the shape and the size of the components 202, 204. Accordingly, the plate 216 may have a rectangular shape or a curved shape as per the shape of the components 202, 204, respectively.

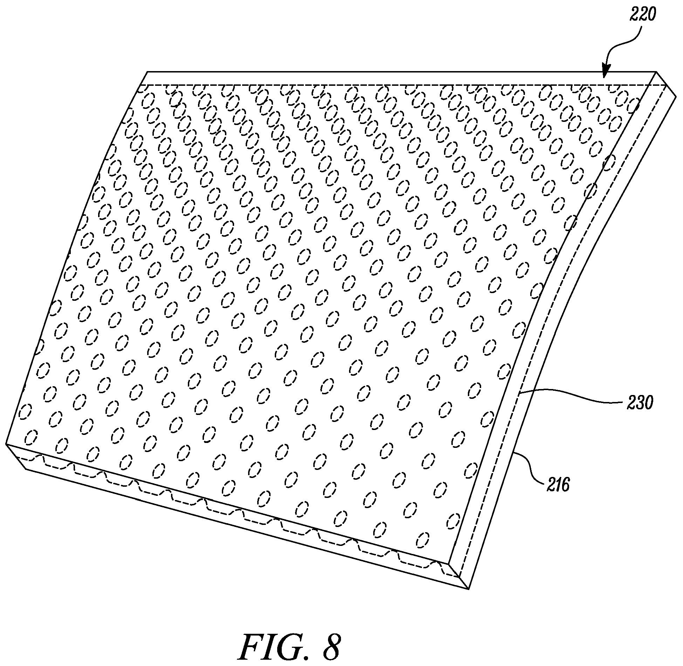

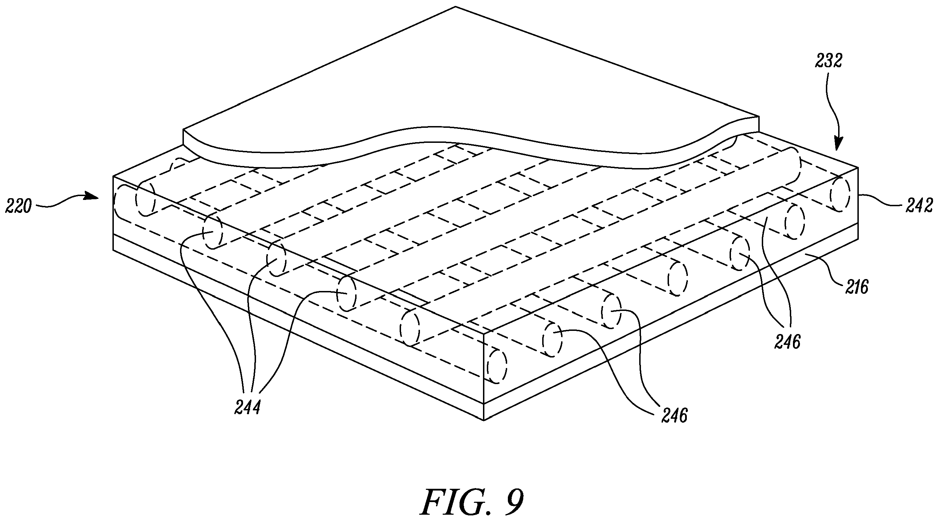

The intensifier tool 214 further includes a heating device 220 coupled to the plate 216 and configured to heat the at least one component 202, 204. In some embodiments, the heating device 220 is at least partially embedded within the plate 216 of the intensifier tool 214. In some embodiments, the heating device 220 includes at least one of an electric cartridge 232 (shown in FIG. 9), a heated fabric 230 (shown in FIG. 8), and a heated film 228. In the illustrated embodiment of FIG. 4, the heating device 220 includes the heated film 228 configured to heat the at least one component 202, 204. The heated film 228 may be embedded in the plate 216. The heated film 228 may heat the plate 216 and subsequently the component 202, 204 for curing an adhesive layer 222. The heated film 228 may be a metallic film .

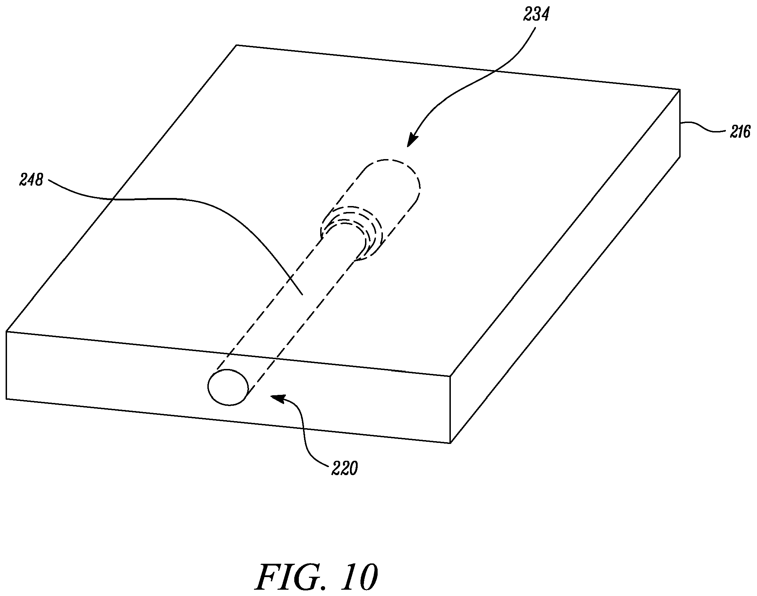

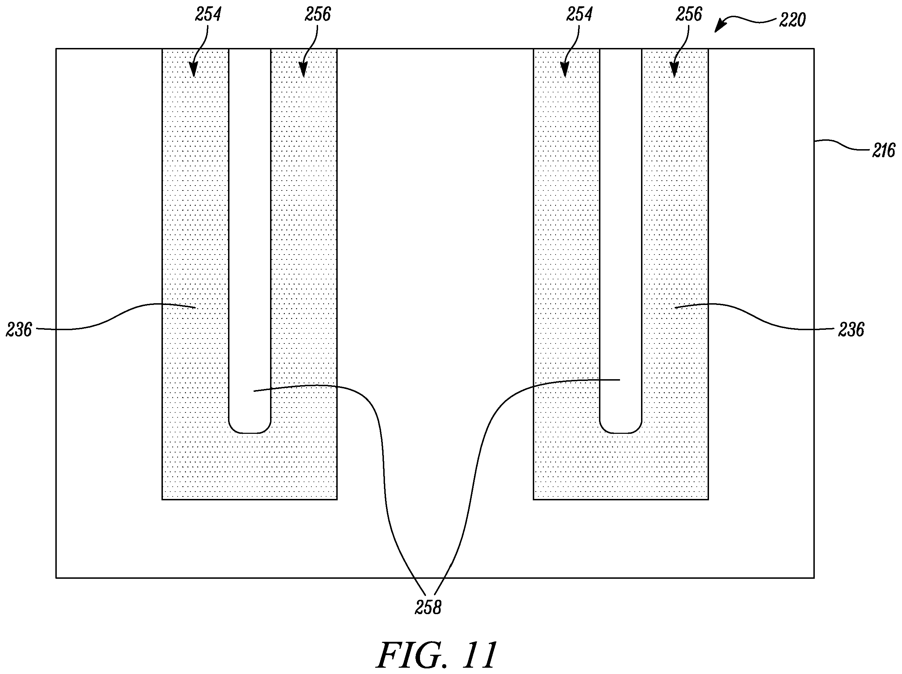

In some other embodiments, the heating device 220 includes at least one of a ceramic heater, an induction heater 234 (shown in FIG. 10), and a heated fluid 236 (shown in FIG. 11). In some embodiments, the heating device 220 embodied as the ceramic heater (not shown) may be embedded in the plate 216. The ceramic heater may include a plurality of heating elements that may generate heat. Further, a temperature of the ceramic heater may be controlled by changing a voltage or an amperage applied to the heating elements of the ceramic heater.

It should be noted that the plate 216 of the intensifier tool 214 described herein may be cost-effective and portable, and may also facilitate inclusion of the heating device 220.

Referring to FIGS. 2 and 4, the system 200 further includes the adhesive layer 222 disposed between the at least one component 202, 204 and the blade 100. The adhesive layer 222 bonds the component 202, 204 to the blade 100 on heating. In some examples, the adhesive layer 222 may include a high bonding adhesive. In an example, the adhesive layer 222 may include epoxy, without any limitations.

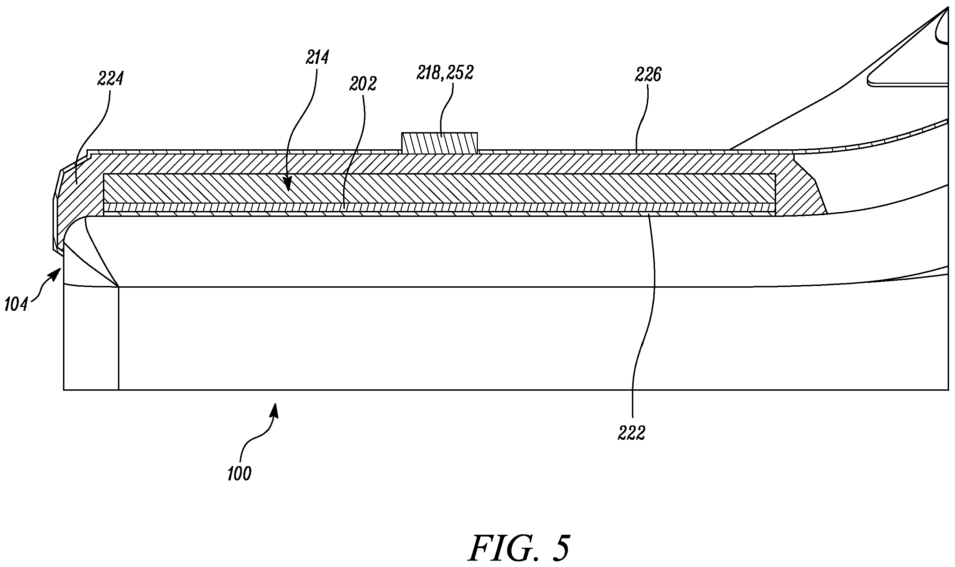

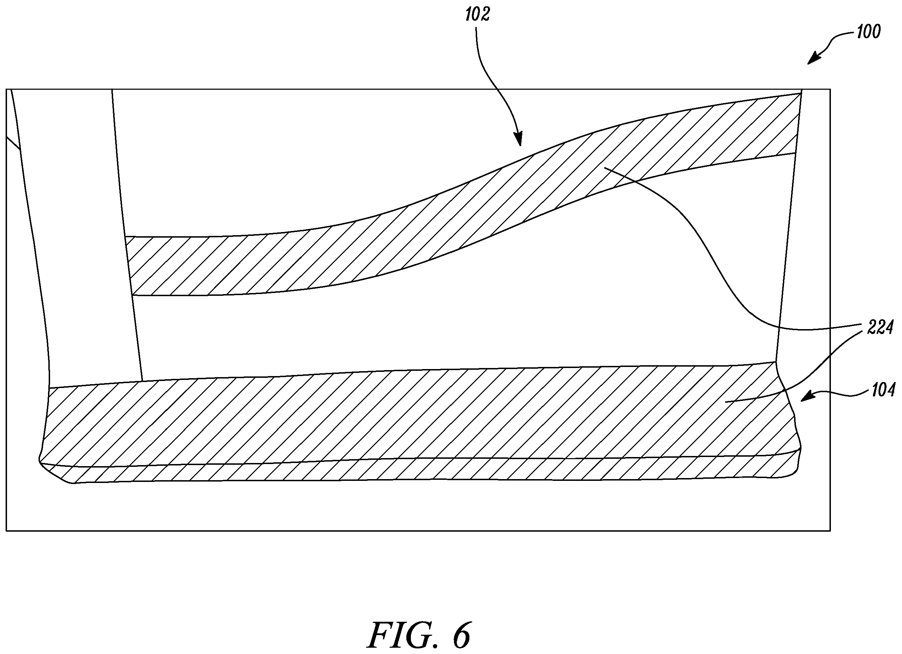

As shown in FIG. 5, the system 200 includes a pressure strip 224. FIG. 5 is a schematic cross-sectional view illustrating the pressure strip 224 coupled to the intensifier tool 214 and the blade 100. FIG. 6 is a schematic perspective view of the pressure strip 224 coupled to the plate 216 (see FIG. 5) and the blade 100.

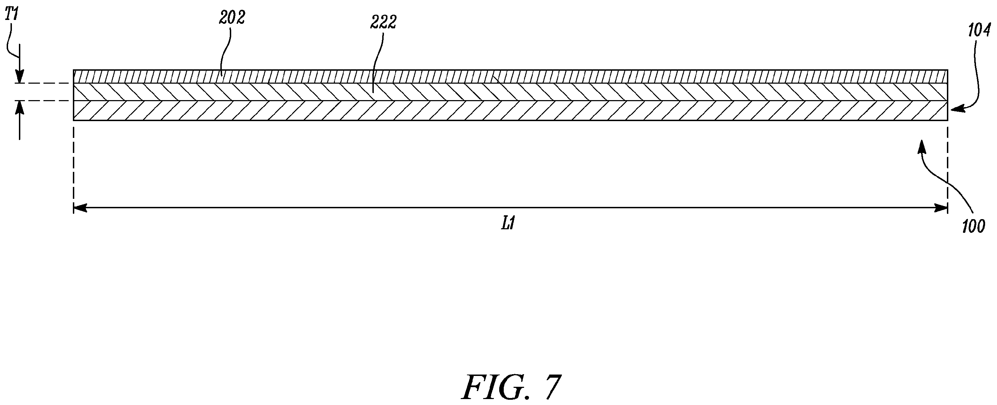

Referring to FIGS. 5 and 6, the pressure strip 224 fully encloses the plate 216. The pressure strip 224 is shown by a hatching in FIG. 6 to differentiate the pressure strip 224 from other parts of the blade 100. In some embodiments, the pressure strip 224 includes at least one of a butyl rubber, a platinum cured rubber, a silicone based rubber, and a peroxide cured rubber. The pressure strip 224 made of one of the above listed rubbers may completely enclose the plate 216 of the intensifier tool 214 (see FIG. 5) so as to prevent a flow-out of the adhesive layer 222. The pressure strip 224 may result in the uniform bond thickness T1 (shown in FIG. 7), minimal or no voids in the adhesive layer 222, and improved adhesion between the at least one component 202, 204 (see FIG. 4) and the blade 100.

As shown in FIG. 4, the system 200 further includes a pressure applicator 218 coupled to the pressure strip 224 and configured to apply a pressure on the plate 216. Further, as the pressure strip 224 fully encloses the plate 216, the pressure strip 224 may allow uniform distribution of the pressure (that is being applied by the pressure applicator 218) along a length of the plate 216. In some embodiments, the pressure applicator 218 includes one or more clamps 252 configured to apply the pressure on the plate 216. Specifically, the pressure applicator 218 includes three clamps 252 that are equidistant from each other. Alternatively, the pressure applicator 218 may include any number of clamps 252 to apply uniform pressure on the plate 216. The clamps 252 are configured to hold the components 202, 204 received in the receiving space 212 of the blade holder 206 against the blade 100 during a clamping operation. Further, the clamps 252 may apply a controlled amount of the pressure on the plate 216. In some examples, the controlled amount of the pressure may be applied via pneumatics or hydraulics. Thus, the the pressure strip 224 and the pressure applicator 218 may together ensure uniform application of pressure on the plate 216 so that the at least one component 202, 204 may adhere to the blade 100 in a desired manner, while maintaining a uniform bond thickness T1 (shown in FIG. 7).

It should be noted that the usage of clamps 252 for applying the pressure is exemplary in nature. Accordingly, the pressure applicator 218 may include any other component by which the pressure may be applied on the at least one component 202, 204, via the plate 216. In some examples, the pressure applicator 218 may include a hydraulic or pneumatic device (such as, cylinder) to apply the pressure on the plate 216.

Referring now to FIGS. 3 and 5, the system 200 further includes an insulation layer 226 disposed on the blade 100. The insulation layer 226 is further at least partially disposed on the pressure strip 224. In other words, the insulation layer 226 may be disposed after the pressure strip 224 is coupled to the plate 216 and the blade 100. Further, the insulation layer 226 may be disposed after the pressure applicator 218 is coupled to the pressure strip 224. In some examples, the insulation layer 226 may include a cut-out/opening to accommodate the pressure applicator 218.

Referring to FIG. 3, the insulation layer 226 encloses the blade 100 from the root area 104 up to the annulus area 102. The insulation layer 226 may cover the blade 100 to minimize heat dissipation and may retain different curing temperatures localized at the root area 104 and/or the annulus area 102 of the blade 100. The insulation layer 226 may prevent any damage to the blade 100 due to overheating.

In some embodiments, the system 200 further includes at least one first temperature sensor 238 configured to measure a first temperature S1 proximal to the root area 104 of the blade 100 and at least one second temperature sensor 240 configured to measure a second temperature S2 proximal to the annulus area 102 of the blade 100. Specifically, the first temperature sensor 238 measures the first temperature S1 proximal to the root area 104 of the blade 100. The at least one first temperature sensor 238 may be disposed within the receiving space 212 of the blade holder 206. The first temperature S1 is measured so as to ensure that the first temperature S1 corresponds to a first predetermined temperature value V1 that is to be maintained in the root area 104. In some examples, the first temperature S1 may lie in a range of 160 to 180 degrees.

Further, the second temperature sensor 240 measures the second temperature S2 proximal to the annulus area 102 of the blade 100. The at least one second temperature sensor 240 may be disposed proximal to the annulus area 102 and outside of the blade holder 206. The second temperature S2 is measured so as to ensure that the second temperature S2 corresponds to a second predetermined temperature value V2 that is to be maintained in the annulus area 102. The second temperature S2 may lie in a range of 110 to 130 degrees. In the illustrated embodiment of FIG. 3, the single first temperature sensor 238 and the single second temperature sensor 240 are shown, however, the system 200 may include multiple first and second temperature sensors 238, 240.

The first temperature sensor 238 and the second temperature sensor 240 may measure the first and second temperatures S1, S2 proximal to the root area 104 and the annulus area 102 of the blade 100, respectively, so as to ensure that the first and second temperatures S1, S2 are sufficient to facilitate curing of the adhesive layer 222, without causing any damage to the at least one component 202, 204, the blade 100, and/or the adhesive layer 222. Based on the values of the first and second temperatures S1, S2 received from the first and second temperature sensors 238, 240, the heating devices 220, that is used to cure the adhesive layers 222, may be operated so as to maintain different first and second temperatures S1, S2 at the root area 104 and the annulus area 102. Thus, the heating device 220 together with the first and second temperature sensors 238, 240 may allow multi-zone temperature curing of the adhesive layer 222 near the root area 104 of the blade 100 and the annulus area 102 of the blade 100.

In some embodiments, the system 200 may include a controller (not shown) for controlling the heating device 220. The controller may receive values of the first and second temperatures S1, S2 from the first temperature sensor 238 and the second temperature sensor 240, respectively. The controller may further control the heating devices 220 to ensure that the first and second temperatures S1, S2 proximal to the root area 104 and the annulus area 102 correspond to the first and second predetermined temperature values V1, V2, respectively. In some examples, the controller may be a control circuit, a computer, a microprocessor, a microcomputer, a central processing unit, or any suitable device or apparatus.

FIG. 7 is a schematic cross-sectional view illustrating the at least one component 202 coupled to the root area 104 of the blade 100 via the adhesive layer 222. Specifically, upon being heated by the heating device 220 (see FIG. 4), the adhesive layer 222 is cured, thereby coupling the at least one component 202 to the blade 100. As can be seen from FIG. 7, the adhesive layer 222 has the uniform bond thickness T1 along a length L1 of the at least one component 202 due to the pressure applied by the pressure applicator 218.

In some examples, the adhesive layer 222 may have the uniform bond thickness T1 of greater than 0.075 millimetres (mm). Further, the system 200 may ensure substantially a smaller or no void formation between the at least one component 202, 204 and the blade 100. For example, the system 200 may ensure less than 2% of voids having a size of less than 6 mm between the at least one component 202, 204 and the blade 100, thereby improving adhesion between the at least one component 202, 204 and the blade 100, as well as improving in-service life and functionality of the component 202, 204.

Referring to FIGS. 1 to 7, the system 200 of the present invention may provide a cost-effective approach to couple the at least one component 202, 204 to the blade 100. Specifically, the system 200 uses the heating device 220 to cure the adhesive layer 222 in order to couple the at least one component 202, 204 to the blade 100. Thus, the heating device 220 may eliminate the requirement of heating the entire blade 100 to cure the adhesive layer 222 (for example, in an autoclave), which may save manufacturing costs. Further, the system 200 may provide faster curing cycles as only some portion of the blade 100 is heated for curing the adhesive layer 222.

The pressure strip 224 of the system 200 may provide spew control, thereby providing the uniform bond thickness T1 of the adhesive layer 222 and minimal to no voids between the at least one component 202, 204 and the blade 100. As the voids are minimal, an adhesion between the at least one component 202, 204 and the blade 100 may be improved, while also improving in-service life and functionality of the at least one component 202, 204. Further, the system 200 may eliminate any additional steps of machining the at least one component 202, 204, thereby maintaining the structural integrity of the at least one component 202, 204 as well as the blade 100. Furthermore, the at least one component 202, 204 may be of high quality and may be compliant with profile tolerances, surface tolerances, adhesive thickness, and porosity requirements.

Further, the system 200 described herein may be used as an -site as well an off-site repair solution during servicing of the blades 100. Furthermore, the system 200 may be portable and easy-to-use by operators for repair and maintenance of blades 100. It should be noted that the system 200 may be used to couple any other component to the gas turbine engine 10.

FIG. 8 is a schematic view of the heating device 220 of an intensifier tool of an embodiment of the system of the present disclosure. The heating device 220 includes the heated fabric 230 coupled to the plate 216 and configured to cure the adhesive layer 222 (see FIG. 4). The heated fabric 230 may be received within the plate 216. The heated fabric 230 may include non-metallic porous or perforated fabric heating elements. In some examples, the heating elements may be in the form of conductive yarns, filaments, fibres, wires, and the like. The heated fabric 230 may generate heat when a voltage is applied to the heating elements. The heat generated by the heated fabric 230 may cure the adhesive layer 222.

FIG. 9 is a schematic view of the heating device 220 of an intensifier tool of another embodiment of the system of the present invention. The heating device 220 includes the electric cartridge 232 configured to cure the adhesive layer 222 (see FIG. 4). The electric cartridge 232 may be received within the plate 216. The electric cartridge 232 includes a casing 242. The electric cartridge 232 further includes one or more first heat pipes 244 and one or more second heat pipes 246 disposed orthogonal to the one or more first heat pipes 244. Each of the first and second heat pipes 244, 246 are disposed within the casing 242. The first and second heat pipes 244, 246 may generate heat when a voltage is applied to the first heat pipes 244 and/or the second heat pipes 246. The heat generated by the electric cartridge 232 may cure the adhesive layer 222.

FIG. 10 is a schematic view of the heating device 220 of an intensifier tool of yet another embodiment of the system of the present invention. The heating device 220 includes the induction heater 234 configured to cure the adhesive layer 222 (see FIG. 4). The induction heater 234 may be at least partially embedded within the plate 216. The induction heater 234 includes an inductor 248. In some examples, the inductor 248 may be a copper inductor. In other examples, the inductor 248 may be made of any other material configured to conduct heat and electricity. Induction heating may be achieved by applying a high-frequency current to the inductor 248, thereby generating a magnetic field around the inductor 248. The magnetic field induces eddy currents in a circular path in the plate 216, thereby generating heat. The heat generated by the induction heater 234 may cure the adhesive layer 222.

FIG. 11 is a schematic view of the heating device 220 of an intensifier tool of a further embodiment of the system of the present invention. The heating device 220 includes the heated fluid 236 configured to cure the adhesive layer 222 (see FIG. 4). For example, compressed air may be used as the heated fluid 236. The plate 216 may define at least one inlet flow channel 254 and at least one outlet flow channel 256 separated by the at least one inlet flow channel 254 via a divider 258. The heated fluid 236 may enter the plate 216 via the inlet flow channels 254 and exit the plate 216 via the outlet flow channels 256. The heated fluid 236 may generate heat to cure the adhesive layer 222 while flowing through the plate 216. Alternatively, flow conduits may be disposed within the plate 216 to define channels through which the heated fluid 236 may flow.

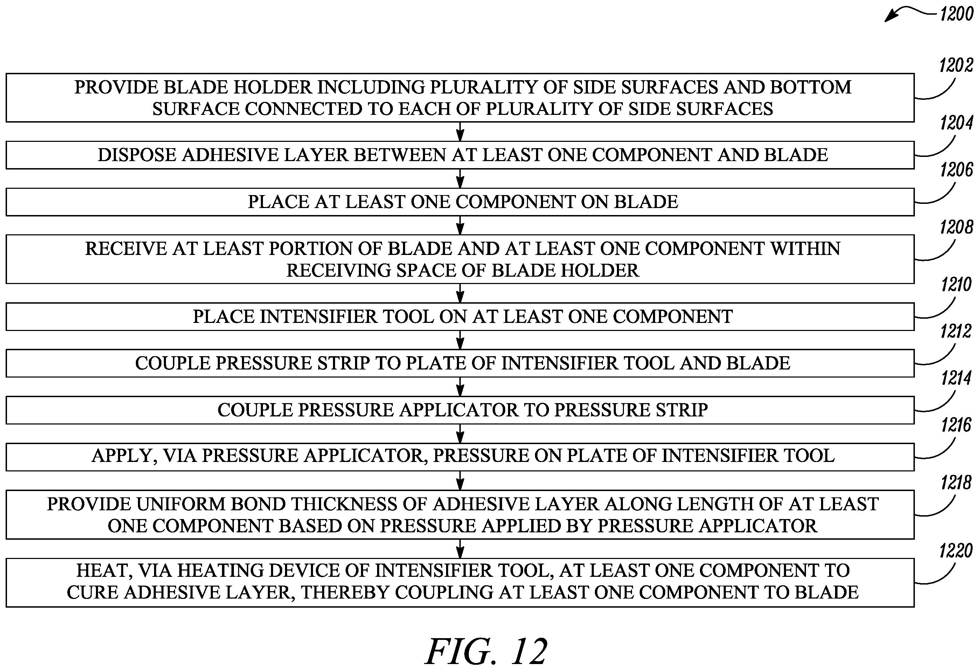

FIG. 12 is a flowchart for a method 1200 of coupling the at least one component 202, 204 to the blade 100 of the gas turbine engine 10 of FIG. 1, according to an embodiment of the present invention. The at least one component 202, 204 includes the plurality of first components 202 configured to be coupled proximal to the root area 104 of the blade 100 and the pair of second components 204 configured to be coupled proximal to the annulus area 102 of the blade 100.

With reference to FIGS. 1 to 12, at step 1202, the blade holder 206 is provided. The blade holder 206 includes the plurality of side walls 208 and the bottom wall 210 connected to each of the plurality of side walls 208. The bottom wall 210 and the plurality of side walls 208 together define the receiving space 212.

At step 1204 the adhesive layer 222 is disposed between the at least one component 202, 204 and the blade 100. At step 1206, the at least one component 202, 204 is placed on the blade 100. At step 1208, at least a portion 108 of the blade 100 and the at least one component 202, 204 is received within the receiving space 212 of the blade holder 206.

At step 1210, the intensifier tool 214 is placed on the least one component 202, 204. The intensifier tool 214 includes the plate 216 configured to contact the at least one component 202, 204 and the heating device 220 coupled to the plate 216.

At step 1212, the pressure strip 224 is coupled to the plate 216 of the intensifier tool 214 and the blade 100. The pressure strip 224 fully encloses the plate 216. The method 1200 further includes disposing the insulation layer 226 on the blade 100 after coupling the pressure strip 224 to the plate 216 of the intensifier tool 214 and the blade 100.

At step 1214, the pressure applicator 218 is coupled to the pressure strip 224.

At step 1216, the pressure applicator 218 applies the pressure on the plate 216 of the intensifier tool 214. In some embodiments, the pressure applicator 218 includes the one or more clamps 252. The method 1200 further includes a step at which the one or more clamps 252 apply the pressure on the plate 216.

At step 1218, the pressure applied by the pressure applicator 218 provides the uniform bond thickness T1 of the adhesive layer 222 along the length L1 of the at least one component 202, 204.

At step 1220, the at least one component 202, 204 is heated via the heating device 220 to cure the adhesive layer 222, thereby coupling the at least one component 202, 204 to the blade 100.

The method 1200 further includes a step of measuring, via the at least one first temperature sensor 238 disposed proximal to the root area 104, the first temperature S1 proximal to the root area 104 of the blade 100. The method 1200 further includes a step of controlling the first temperature S1 proximal to the root area 104 of the blade 100, such that the first temperature S1 corresponds to the first predetermined temperature value V1.

The method 1200 further includes a step of measuring, via at least one second temperature sensor 240 disposed proximal to the annulus area 102, the second temperature S2 proximal to the annulus area 102 of the blade 100. The method 1200 further includes a step of controlling the second temperature S2 proximal to the annulus area 102 of the blade 100, such that the second temperature S2 corresponds to the second predetermined temperature value V2.

It should be noted that, during actual implementation, an order in which the steps of the method 1200 are performed may vary from what is explained above and illustrated in FIG. 12, as per requirements.

Further, the gas turbine engine 10 includes the at least one component 202, 204 manufactured by the method 1200 explained above.

## Claims

1. A system (200) for coupling at least one component (202, 204) to a blade (100) of a gas turbine engine (10), the system (200) comprising:
a blade holder (206) including a plurality of side walls (208) and a bottom wall (210) connected to each of the plurality of side walls (208), wherein the bottom wall (210) and the plurality of side walls (208) together define a receiving space (212) to receive at least a portion (108) of the blade (100) and the at least one component (202, 204) therein;
an intensifier tool (214) disposed on the at least one component (202, 204), wherein the intensifier tool (214) includes a heating device (220) configured to heat the at least one component (202, 204);
an adhesive layer (222) disposed between the at least one component (202, 204) and the blade (100); and
a pressure applicator (218),
wherein the adhesive layer (222) has a uniform bond thickness (T1) along a length (L1) of the at least one component (202, 204) due to the pressure applied by the pressure applicator (218), and wherein, upon being heated by the heating device (220), the adhesive layer (222) is cured, thereby coupling the at least one component (202, 204) to the blade (100);
the system (200) being **characterised in that**:
the intensifier tool (214) includes a plate (216) that is configured to contact the at least one component (202, 204), the heating device (220) being coupled to the plate (216);
a pressure strip (224) is coupled to the plate (216) of the intensifier tool (214) and the blade (100), the pressure strip (224) fully enclosing the plate (216); and
the pressure applicator (218) is coupled to the pressure strip (224) and is configured to apply a pressure on the plate (216).

2. The system (200) of claim 1, wherein the at least one component (202, 204) includes a polyimide-based wear resistant strip.

3. The system (200) of claim 1 or 2, wherein the at least one component (202, 204) is made of a material that exhibits a coefficient of friction below 0.15, high load resistance, high temperature resistance, corrosion resistance, and/or wear resistance.

4. The system (200) of any preceding claim, wherein the pressure strip (224) includes at least one of a butyl rubber, a platinum cured rubber, a silicone based rubber, and a peroxide cured rubber.

5. The system (200) of any preceding claim, further comprising an insulation layer (226) disposed on the blade (100), wherein the insulation layer (226) is further at least partially disposed on the pressure strip (224).

6. The system (200) of any preceding claim, wherein the at least one component (202, 204) includes a plurality of first components (202) configured to be coupled to a root area (104) of the blade (100) and a pair of second components (204) configured to be coupled to an annulus area (102) of the blade (100).

7. The system (200) of claim 6, further comprising at least one first temperature sensor (238) configured to measure a first temperature (S1) proximal to the root area (104) of the blade (100) and at least one second temperature sensor (240) configured to measure a second temperature (S2) proximal to the annulus area (102) of the blade (100), wherein the at least one first temperature sensor (238) is disposed proximal to the root area (104) and the at least one second temperature sensor (240) is disposed proximal to the annulus area (102).

8. The system (200) of any preceding claim, wherein the plate (216) of the intensifier tool (214) includes at least one of a carbon material and a metallic material.

9. The system (200) of any preceding claim, wherein the heating device (220) is at least partially embedded within the plate (216) of the intensifier tool (214).

10. The system (200) of claim 9, wherein the heating device (220) includes at least one of an electric cartridge (232), a heated fabric (230), and a heated film (228).

11. The system (200) of any preceding claim, wherein the heating device (220) includes at least one of a ceramic heater, an induction heater (234), and a heated fluid (236).

12. The system (200) of any preceding claim, wherein the pressure applicator (218) includes one or more clamps (252) configured to apply the pressure on the plate (216).

13. A method (1200) of coupling at least one component (202, 204) to a blade (100) of a gas turbine engine (10), the method (1200) comprising:
providing a blade holder (206) including a plurality of side walls (208) and a bottom wall (210) connected to each of the plurality of side walls (208), wherein the bottom wall (210) and the plurality of side walls (208) together define a receiving space (212);
disposing an adhesive layer (222) between the at least one component (202, 204) and the blade (100);
placing the at least one component (202, 204) on the blade (100);
receiving at least a portion (108) of the blade (100) and the at least one component (202, 204) within the receiving space (212) of the blade holder (206);
placing an intensifier tool (214) on the at least one component (202, 204), wherein the intensifier tool (214) includes a plate (216) configured to contact the at least one component (202, 204), a pressure applicator (218) coupled to the plate (216), and a heating device (220) coupled to the plate (216);
coupling a pressure strip (224) to the plate (216) of the intensifier tool (214) and the blade (100), wherein the pressure strip (224) fully encloses the plate (216);
coupling a pressure applicator (218) to the pressure strip (224);
applying, via the pressure applicator (218), a pressure on the plate (216) of the intensifier tool (214);
providing a uniform bond thickness (T1) of the adhesive layer (222) along a length (L1) of the at least one component (202, 204) based on the pressure applied by the pressure applicator (218); and
heating, via the heating device (220) of the intensifier tool (214), the at least one component (202, 204) to cure the adhesive layer (222), thereby coupling the at least one component (202, 204) to the blade (100).

14. The method (1200) of claim 13, further comprising disposing an insulation layer (226) on the blade (100) after coupling the pressure strip (224) to the plate (216) of the intensifier tool (214) and the blade (100).

15. The method (1200) of claim 13 or 14, wherein the at least one component (202, 204) includes a plurality of first components (202) configured to be coupled proximal to a root area (104) of the blade (100) and a pair of second components (204) configured to be coupled proximal to an annulus area (102) of the blade (100).

## Patentansprüche

1. System (200) zum Koppeln mindestens einer Komponente (202, 204) mit einer Schaufel (100) eines Gasturbinentriebwerks (10), wobei das System (200) Folgendes umfasst:
einen Schaufelhalter (206), der eine Vielzahl von Seitenwänden (208) und eine Bodenwand (210) enthält, die mit jeder der Vielzahl von Seitenwänden (208) verbunden ist, wobei die Bodenwand (210) und die Vielzahl von Seitenwänden (208) zusammen einen Aufnahmeraum (212) definieren, um mindestens einen Abschnitt (108) der Schaufel (100) und die mindestens eine Komponente (202, 204) darin aufzunehmen;
ein Verstärkerwerkzeug (214), das an der mindestens einen Komponente (202, 204) angeordnet ist, wobei das Verstärkerwerkzeug (214) eine Heizvorrichtung (220) enthält, die dazu konfiguriert ist, die mindestens eine Komponente (202, 204) zu erwärmen;
eine Klebeschicht (222), die zwischen der mindestens einen Komponente (202, 204) und der Schaufel (100) angeordnet ist; und
einen Druckapplikator (218),
wobei die Klebeschicht (222) aufgrund des durch den Druckapplikator (218) aufgebrachten Drucks eine gleichmäßige Haftungsdicke (T1) entlang einer Länge (L1) der mindestens einen Komponente (202, 204) aufweist, und wobei die Klebeschicht (222) beim Erwärmen durch die Heizvorrichtung (220) gehärtet wird, wodurch die mindestens eine Komponente (202, 204) mit der Schaufel (100) gekoppelt wird;
wobei das System (200) **dadurch gekennzeichnet ist, dass**:
das Verstärkerwerkzeug (214) eine Platte (216) enthält, die dazu konfiguriert ist, die mindestens eine Komponente (202, 204) zu berühren, wobei die Heizvorrichtung (220) mit der Platte (216) gekoppelt ist;
eine Druckleiste (224) mit der Platte (216) des Verstärkerwerkzeugs (214) und der Schaufel (100) gekoppelt ist, wobei die Druckleiste (224) die Platte (216) vollständig umschließt; und
der Druckapplikator (218) mit der Druckleiste (224) gekoppelt und dazu konfiguriert ist, einen Druck auf die Platte (216) aufzubringen.

2. System (200) nach Anspruch 1, wobei die mindestens eine Komponente (202, 204) eine verschleißbeständige Leiste auf Polyimidbasis enthält.

3. System (200) nach Anspruch 1 oder 2, wobei die mindestens eine Komponente (202, 204) aus einem Material hergestellt ist, das einen Reibungskoeffizienten unter 0,15, eine hohe Lastbeständigkeit, eine hohe Temperaturbeständigkeit, Korrosionsbeständigkeit und/oder Verschleißbeständigkeit zeigt.

4. System (200) nach einem vorhergehenden Anspruch, wobei die Druckleiste (224) mindestens eines von einem Butylkautschuk, einem mit Platin vulkanisierten Kautschuk, einem Kautschuk auf Silikonbasis und einem mit Peroxid vulkanisierten Kautschuk enthält.

5. System (200) nach einem vorhergehenden Anspruch, ferner umfassend eine Isolierschicht (226), die auf der Schaufel (100) angeordnet ist, wobei die Isolierschicht (226) ferner mindestens teilweise auf der Druckleiste (224) angeordnet ist.

6. System (200) nach einem vorhergehenden Anspruch, wobei die mindestens eine Komponente (202, 204) eine Vielzahl von ersten Komponenten (202), die dazu konfiguriert sind, mit einem Fußbereich (104) der Schaufel (100) gekoppelt zu werden, und ein Paar zweiter Komponenten (204) enthält, die dazu konfiguriert sind, mit einem Ringraumbereich (102) der Schaufel (100) gekoppelt zu werden.

7. System (200) nach Anspruch 6, ferner umfassend mindestens einen ersten Temperatursensor (238), der dazu konfiguriert ist, eine erste Temperatur (S1) proximal zu dem Fußbereich (104) der Schaufel (100) zu messen, und mindestens einen zweiten Temperatursensor (240), der dazu konfiguriert ist, eine zweite Temperatur (S2) proximal zu dem Ringraumbereich (102) der Schaufel (100) zu messen, wobei der mindestens eine erste Temperatursensor (238) proximal zu dem Fußbereich (104) angeordnet ist und der mindestens eine zweite Temperatursensor (240) proximal zu dem Ringraumbereich (102) angeordnet ist.

8. System (200) nach einem vorhergehenden Anspruch, wobei die Platte (216) des Verstärkerwerkzeugs (214) mindestens eines von einem Kohlenstoffmaterial und einem metallischen Material enthält.

9. System (200) nach einem vorhergehenden Anspruch, wobei die Heizvorrichtung (220) mindestens teilweise in die Platte (216) des Verstärkerwerkzeugs (214) eingebettet ist.

10. System (200) nach Anspruch 9, wobei die Heizvorrichtung (220) mindestens eines von einem elektrischen Einsatz (232), einem beheizten Gewebe (230) und einer beheizten Folie (228) enthält.

11. System (200) nach einem vorhergehenden Anspruch, wobei die Heizvorrichtung (220) mindestens eines von einer keramischen Heizung, einer Induktionsheizung (234) und einem beheizten Fluid (236) enthält.

12. System (200) nach einem vorhergehenden Anspruch, wobei der Druckapplikator (218) eine oder mehrere Klemmen (252) enthält, die dazu konfiguriert sind, den Druck auf die Platte (216) aufzubringen.

13. Verfahren (1200) zum Koppeln mindestens einer Komponente (202, 204) mit einer Schaufel (100) eines Gasturbinentriebwerks (10), wobei das Verfahren (1200) Folgendes umfasst:
Bereitstellen eines Schaufelhalters (206), der eine Vielzahl von Seitenwänden (208) und eine Bodenwand (210) enthält, die mit jeder der Vielzahl von Seitenwänden (208) verbunden ist, wobei die Bodenwand (210) und die Vielzahl von Seitenwänden (208) zusammen einen Aufnahmeraum (212) definieren;
Anordnen einer Klebeschicht (222) zwischen der mindestens einen Komponente (202, 204) und der Schaufel (100);
Platzieren der mindestens einen Komponente (202, 204) an der Schaufel (100);
Aufnehmen mindestens eines Abschnitts (108) der Schaufel (100) und der mindestens einen Komponente (202, 204) innerhalb des Aufnahmeraums (212) des Schaufelhalters (206);
Platzieren eines Verstärkerwerkzeugs (214) an der mindestens einen Komponente (202, 204), wobei das Verstärkerwerkzeug (214) eine Platte (216), die dazu konfiguriert ist, die mindestens eine Komponente (202, 204) zu berühren, einen Druckapplikator (218), der mit der Platte (216) gekoppelt ist, und eine Heizvorrichtung (220), die mit der Platte (216) gekoppelt ist, enthält;
Koppeln einer Druckleiste (224) mit der Platte (216) des Verstärkerwerkzeugs (214) und die Schaufel (100), wobei die Druckleiste (224) die Platte (216) vollständig umschließt;
Koppeln eines Druckapplikators (218) mit der Druckleiste (224);
Aufbringen eines Drucks über den Druckapplikator (218) auf die Platte (216) des Verstärkerwerkzeugs (214);
Bereitstellen einer gleichmäßigen Haftungsdicke (T1) der Klebeschicht (222) entlang einer Länge (L1) der mindestens einen Komponente (202, 204) basierend auf dem durch den Druckapplikator (218) aufgebrachten Druck; und
Erwärmen der mindestens einen Komponente (202, 204) über die Heizvorrichtung (220) des Verstärkerwerkzeugs (214), um die Klebeschicht (222) zu härten, wodurch die mindestens eine Komponente (202, 204) mit der Schaufel (100) gekoppelt wird.

14. Verfahren (1200) nach Anspruch 13, ferner umfassend Anordnen einer Isolierschicht (226) auf der Schaufel (100) nach dem Koppeln der Druckleiste (224) mit der Platte (216) des Verstärkerwerkzeugs (214) und der Schaufel (100).

15. Verfahren (1200) nach Anspruch 13 oder 14, wobei die mindestens eine Komponente (202, 204) eine Vielzahl von ersten Komponenten (202), die dazu konfiguriert sind, proximal zu einem Fußbereich (104) der Schaufel (100) gekoppelt zu werden, und ein Paar zweiter Komponenten (204) enthält, die dazu konfiguriert sind, proximal zu einem Ringraumbereich (102) der Schaufel (100) gekoppelt zu werden.

## Revendications

1. Système (200) pour coupler au moins un composant (202, 204) à une pale (100) d'un moteur à turbine à gaz (10), le système (200) comprenant :
un support de pale (206) comprenant une pluralité de parois latérales (208) et une paroi inférieure (210) connectée à chacune de la pluralité de parois latérales (208), dans lequel la paroi inférieure (210) et la pluralité de parois latérales (208) définissent ensemble un espace de réception (212) pour recevoir au moins une partie (108) de la pale (100) et l'au moins un composant (202, 204) à l'intérieur de celui-ci ;
un outil intensificateur (214) disposé sur l'au moins un composant (202, 204), dans lequel l'outil intensificateur (214) comprend un dispositif de chauffage (220) conçu pour chauffer l'au moins un composant (202, 204) ;
une couche adhésive (222) disposée entre l'au moins un composant (202, 204) et la pale (100) ; et
un applicateur de pression (218),
dans lequel la couche adhésive (222) comporte une épaisseur de liaison uniforme (T1) le long d'une longueur (L1) de l'au moins un composant (202, 204) du fait de la pression appliquée par l'applicateur de pression (218), et dans lequel, lorsqu'elle est chauffée par le dispositif de chauffage (220), la couche adhésive (222) est durcie, couplant ainsi l'au moins un composant (202, 204) à la pale (100) ;
le système (200) étant **caractérisé en ce que** :
l'outil intensificateur (214) comprend une plaque (216) qui est conçue pour entrer en contact avec l'au moins un composant (202, 204), le dispositif de chauffage (220) étant couplé à la plaque (216) ;
une bande de pression (224) est couplée à la plaque (216) de l'outil intensificateur (214) et à la pale (100), la bande de pression (224) enveloppant complètement la plaque (216) ; et
l'applicateur de pression (218) est couplé à la bande de pression (224) et est conçu pour appliquer une pression sur la plaque (216).

2. Système (200) selon la revendication 1, dans lequel l'au moins un composant (202, 204) comprend une bande résistante à l'usure à base de polyimide.

3. Système (200) selon la revendication 1 ou 2, dans lequel l'au moins un composant (202, 204) est fait d'un matériau qui présente un coefficient de frottement inférieur à 0,15, une résistance à la charge élevée, une résistance à la température élevée, une résistance à la corrosion et/ou une résistance à l'usure.

4. Système (200) selon l'une quelconque des revendications précédentes, dans lequel la bande de pression (224) comprend au moins un élément parmi un caoutchouc butyle, un caoutchouc durci au platine, un caoutchouc à base de silicone et un caoutchouc durci au peroxyde.

5. Système (200) selon l'une quelconque des revendications précédentes, comprenant en outre une couche d'isolation (226) disposée sur la pale (100), dans lequel la couche d'isolation (226) est en outre au moins partiellement disposée sur la bande de pression (224).

6. Système (200) selon l'une quelconque des revendications précédentes, dans lequel l'au moins un composant (202, 204) comprend une pluralité de premiers composants (202) conçus pour être couplés à une zone de racine (104) de la pale (100) et une paire de seconds composants (204) conçus pour être couplés à une zone annulaire (102) de la pale (100).

7. Système (200) selon la revendication 6, comprenant en outre au moins un premier capteur de température (238) configuré pour mesurer une première température (S1) à proximité de la zone de racine (104) de la pale (100) et au moins un deuxième capteur de température (240) configuré pour mesurer une deuxième température (S2) à proximité de la zone annulaire (102) de la pale (100), dans lequel l'au moins un premier capteur de température (238) est disposé à proximité de la zone de racine (104) et l'au moins un deuxième capteur de température (240) est disposé à proximité de la zone annulaire (102).

8. Système (200) selon l'une quelconque des revendications précédentes, dans lequel la plaque (216) de l'outil intensificateur (214) comprend au moins l'un d'un matériau en carbone et d'un matériau métallique.

9. Système (200) selon l'une quelconque des revendications précédentes, dans lequel le dispositif de chauffage (220) est au moins partiellement intégré à l'intérieur de la plaque (216) de l'outil intensificateur (214).

10. Système (200) selon la revendication 9, dans lequel le dispositif de chauffage (220) comprend au moins l'un d'une cartouche électrique (232), d'un tissu chauffé (230) et d'un film chauffé (228).

11. Système (200) selon l'une quelconque des revendications précédentes, dans lequel le dispositif de chauffage (220) comprend au moins l'un d'un élément chauffant en céramique, d'un élément chauffant à induction (234) et d'un fluide chauffé (236).

12. Système (200) selon l'une quelconque des revendications précédentes, dans lequel l'applicateur de pression (218) comprend une ou plusieurs pinces (252) conçues pour appliquer la pression sur la plaque (216).

13. Procédé (1200) pour coupler au moins un composant (202, 204) à une pale (100) d'un moteur à turbine à gaz (10), le procédé (1200) comprenant :
la fourniture d'un support de pale (206) comprenant une pluralité de parois latérales (208) et une paroi inférieure (210) connectée à chacune de la pluralité de parois latérales (208), dans lequel la paroi inférieure (210) et la pluralité de parois latérales (208) définissent ensemble un espace de réception (212) ;
la disposition d'une couche adhésive (222) entre l'au moins un composant (202, 204) et la pale (100) ;
le placement de l'au moins un composant (202, 204) sur la pale (100) ;
la réception d'au moins une partie (108) de la pale (100) et l'au moins un composant (202, 204) à l'intérieur de l'espace de réception (212) du support de pale (206) ;
le placement d'un outil intensificateur (214) sur l'au moins un composant (202, 204), dans lequel l'outil intensificateur (214) comprend une plaque (216) conçue pour entrer en contact avec l'au moins un composant (202, 204), un applicateur de pression (218) couplé à la plaque (216), et un dispositif de chauffage (220) couplé à la plaque (216) ;
le couplage d'une bande de pression (224) à la plaque (216) de l'outil intensificateur (214) et à la pale (100), dans lequel la bande de pression (224) enveloppe complètement la plaque (216) ;
le couplage d'un applicateur de pression (218) à la bande de pression (224) ;
l'application, via l'applicateur de pression (218), d'une pression sur la plaque (216) de l'outil intensificateur (214) ;
la fourniture d'une épaisseur de liaison uniforme (T1) de la couche adhésive (222) le long d'une longueur (L1) de l'au moins un composant (202, 204) en fonction de la pression appliquée par l'applicateur de pression (218) ; et
le chauffage, via le dispositif de chauffage (220) de l'outil intensificateur (214), de l'au moins un composant (202, 204) pour durcir la couche adhésive (222), couplant ainsi l'au moins un composant (202, 204) à la pale (100).

14. Procédé (1200) selon la revendication 13, comprenant en outre la disposition d'une couche d'isolation (226) sur la pale (100) après le couplage de la bande de pression (224) à la plaque (216) de l'outil intensificateur (214) et à la pale (100).

15. Procédé (1200) selon la revendication 13 ou 14, dans lequel l'au moins un composant (202, 204) comprend une pluralité de premiers composants (202) configurés pour être couplés à proximité d'une zone de racine (104) de la pale (100) et une paire de seconds composants (204) configurés pour être couplés à proximité d'une zone annulaire (102) de la pale (100).
